# EUROPÄISCHE PATENTANMELDUNG

(11) **EP 1 609 576 A1**
(43) Veröffentlichungstag der Anmeldung: **28.12.2005**
(21) Anmeldenummer: 05012505.3
(22) Anmeldetag: 10.06.2005
(51) Int. Cl.: B29C 44/12, B29C 70/08, B32B 5/22, B32B 27/12, B32B 27/04

(54) **Verfahren zur Herstellung von Polyurethan-Formkörpern und deren Verwendung**

(30) Priorität: 22.06.2004 DE 102004030196
(71) Anmelder: Bayer MaterialScience AG, 51368 Leverkusen (DE)
(72) Erfinder: Wirtz, Hans-Guido, 51377 Leverkusen (DE); Symannek, Achim, 42799 Leichlingen (DE); Paul, Reiner, Dr., 42799 Leichlingen (DE); Wegener, Dirk, Dr., 40789 Monheim (DE)

(57) **Zusammenfassung**

Verfahren zur Herstellung von Polyurethan-Formkörpern (B) und deren Verwendung, wobei
- a): ein Sandwich aus mindestens einer Kernschicht und zwei Verstärkungsfaserdeckschichten oder eine Verstärkungsfasermatte vorgelegt wird, wobei die Verstärkungsfaserdeckschichten bzw. die Verstärkungsfasermatte mit einer Polyurethanmischung beaufschlagt wird,
- b): das Teil aus a) in eine Form eingelegt wird,
- c): das Teil in der Form bei einer Werkzeugtemperatur zwischen 40 and 160°C geformt wird und gleichzeitig die Polyurethanmischung ausgehärtet wird,
- d): der in c) hergestellte Formkörper aus der Form entnommen wird, wobei bei der Beaufschlagung der Verstärkungsfaserdeckschichten bzw. der Verstärkungsfasermatte mit der Polyurethanmischung zumindest teilweise eine mit Luft, Stichstoff oder CO₂ beladene Polyurethanmischung verwendet wird, die zusätzlich einen Schaumstabilisator enthält.

## Beschreibung

Die vorliegende Erfindung betrifft ein Verfahren zur Herstellung von Polyurethan(PU)-Formkörpern, insbesondere PU-Sandwichbauteilen und deren Verwendung.

Verfahren zur Herstellung von Sandwich-Elementen für die Fertigung von flacher Plattenware gibt es seit langem. Der Sandwichaufbau besteht aus einem leichten und druckfesten Kern mit hochfesten Deckschichten. Der Verbund dieses Aufbaus erfolgt durch ein PU-Reaktionsgemisch, das beidseitig aufgetragen in einem thermischen Pressverfahren eine unlösbare Verbindung entstehen lässt. Die innenliegende Kernschicht des Sandwichaufbaus besteht vorzugsweise aus Pappe mit einer Wabenstruktur, die während des Pressvorgangs als Distanzhalter für die mit PU benetzten Deckschichten dient. Die Benetzung der Sandwichdeckschichten erfolgt vorzugsweise durch besprühen. Der Substratträger wird dabei robotergeführt und befindet sich während des PU-Auftrags mittels Mischkopf in waagerechter oder vorzugsweise in senkrechter Position, da in dieser Lage zeitgleich ein zweiseitiger Auftrag erfolgen kann. Auch der Polyurethan-Mischkopf kann robotergeführt sein.

Durch die Kombination aus Press- und Formgebungsverfahren konnten auch dreidimensional gestaltete Formkörper hergestellt werden. Der Wabenkern, der für Plattenware vollflächig um wenige zehntel Millimeter auf eine gleich bleibende Stärke gestaucht wird, wird nun in Teilbereichen bis auf wenige Prozent seines Ursprungmaßes verpresst. Die Gestaltung der Außenkontur des Fertigteils erfolgt über ein Abquetschen des Sandwichpaketes durch Pinchkanten im formgebenden Werkzeug, so dass das Bauteil nach der Formentnahme über geschlossene Aussenkanten verfügt. Bei diesem Formgebungsverfahren erhält man ein dreidimensionales Bauteil, das unkaschierte Sichtflächen wie auch Sichtkanten aufweist.

Die bisherigen Verfahren zur Herstellung von PU-Formkörpern, insbesondere PU-Sandwichbauteilen, liefern allerdings dreidimensionale Teile mit einer schlechten Kantenausprägung bzw. unzureichenden Materialausfüllung. Insbesondere bei stark konturierten Körpern ist die Kantenausprägung meist ungenügend. Darüber hinaus ist die Menge an aufzutragendem Polyurethan begrenzt, da das aufgetragene, flüssige Polyurethangemisch zum Abtropfen neigt.

Aufgabe der vorliegenden Erfindung war es, ein Verfahren zur Verfügung zu stellen, das es gestattet, dreidimensionale PU-Körper mit guter Kantenausprägung auf einfache Weise herzustellen.

Diese Aufgabe konnte überraschenderweise dadurch gelöst werden, dass bei der Beaufschlagung mit der Polyurethanmischung diese mit technischen Gasen beladen wird und dass die Polyurethanmischung außerdem einen Schaumstabilisator enthält.

Gegenstand der Erfindung ist ein Verfahren zur Herstellung von Polyurethan-Formkörpern, wobei
a) ein Sandwich aus mindestens einer Kernschicht (innenliegenden Schicht) und zwei Verstärkungsfaserdeckschichten oder eine Verstärkungsfasermatte vorgelegt wird, wobei die Verstärkungsfaserdeckschichten bzw. die Verstärkungsfasermatte mit einer Polyurethanmischung beaufschlagt wird,
b) das Teil aus a) in eine Form eingelegt wird,
c) das Teil in der Form bei einer Werkzeugtemperatur zwischen 40 und 160°C geformt wird und gleichzeitig die Polyurethanmischung ausgehärtet wird,
d) der in c) hergestellte Formkörper aus der Form entnommen wird und
e) der Formkörper gegebenenfalls nachbearbeitet wird,
dadurch gekennzeichnet, dass bei der Beaufschlagung der Verstärkungsfaserdeckschichten bzw. der Verstärkungsfasermatte mit der Polyurethanmischung zumindest teilweise eine mit technischen Gasen beladene Polyurethanmischung verwendet wird, die zusätzlich einen Schaumstabilisator enthält.

Mit dem erfindungsgemäßen Verfahren werden Formkörper mit einer guten Kantenausprägung erhalten. Zudem ist es möglich, die Menge an Polyurethan anteilsmäßig zur Auftragsfläche zu erhöhen und ein Wegfließen oder Abtropfen zu verhindern bzw. zu minimieren.

In einer besonderen Ausführungsform des erfindungsgemäßen Verfahrens werden bei der Beaufschlagung mit der Polyurethanmischung zusätzlich geschnittene Fasern partiell oder ganzflächig auf die Verstärkungsfaserdeckschichten bzw. auf die Verstärkungsfasermatte aufgebracht. Die Anbindung dieser zusätzlich aufgetragenen, geschnittenen und mit PU benetzten Fasern ist gegeben.

Als technische Gase werden bevorzugt Luft, Stickstoff und CO₂ eingesetzt.

Die Einbringung der technischen Gase erfolgt nach bekannten Verfahren wie z.B. Batch- oder Online-Verfahren.

Als Schaumstabilisatoren kommen vorzugsweise vor allem Polyethersiloxane, speziell wasserlösliche Vertreter, in Frage. Diese Verbindungen sind im Allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-PS 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 25 58 523. Geeignet sind auch andere Organopolysiloxane, oxyethylierte Alkylphenole, oxyethylierte Fettalkohole, Paraffinöle, Ricinusöl- bzw. Ricinolsäureester, Türkischrotöl und Erdnussöl und Zellregler wie Paraffine, Fettalkohole und Dimethylpolysiloxane. Zur Verbesserung der Emulgierwirkung, der Zellstruktur und/oder zu deren Stabilisierung eignen sich ferner oligomere Polyacrylate mit Polyoxyalkylen-und Fluoralkanresten als Seitengruppen. Die Schaumstabilisatoren werden üblicherweise in Mengen von 0,01 bis 5 Gew.-Teilen, bezogen auf 100 Gew.-Teile des Polyols angewandt.

Die Polyurethanharzmischung enthält
A) mindestens eine Polyolkomponente mit einer durchschnittlichen OH-Zahl von 300 bis 700, die mindestens ein kurzkettiges und ein langkettiges Polyol enthält, wobei die Ausgangspolyole eine Funktionalität von 2 bis 6 aufweisen,
B) mindestens ein Polyisocyanat,
C) gegebenenfalls Treibmittel
D) Aktivatoren sowie
E) gegebenenfalls weitere Hilfs-, Trenn- und Zusatzmittel.

Als Polyolkomponente eignen sich Polyole mit mindestens zwei gegen Isocyanatgruppen reaktiven H-Atomen; vorzugsweise werden Polyesterpolyole und Polyetherpolyole eingesetzt.

Bevorzugt werden erfindungsgemäß höherkernige Isocyanate der Diphenylmethandiisocyanat-Reihe (pMDI-Typen), deren Prepolymere oder rohes MDI eingesetzt.

Als Treibmittel C) können allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel sind (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether. Ketone oder Acetate. Eine Treibwirkung kann auch durch Zusatz von bei Temperaturen über Raumtemperatur unter Abspaltung von Gasen sich zersetzende Verbindungen erzielt werden. Die unterschiedlichen Treibmittel können einzeln oder in beliebigen Mischungen untereinander zum Einsatz kommen.

Zur Katalyse werden die an sich üblichen Aktivatoren für die Treib- und Vernetzungsreaktion, wie z.B. Amine oder Metallsalze verwendet.

Der Reaktionsmischung können gegebenenfalls weitere Hilfs-, Trenn- und Zusatzmittel einverleibt werden, beispielsweise oberflächenaktive Zusatzstoffe, wie Emulgatoren, Flammschutzmittel, Keimbildungsmittel, Oxidationsverzögerer, Gleit- und Entformungsmittel, Farbstoffe, Dispergierhilfen und Pigmente.

Die Komponenten werden in solchen Mengen zur Umsetzung gebracht, dass das Äquivalenzverhältnis der NCO-Gruppen der Polyisocyanate zur Summe der gegenüber Isocyanatgruppen reaktiven Wasserstoffe der übrigen Komponenten 0,8 : 1 bis 1,4 : 1, vorzugsweise 0,9 : 1 bis 1,3 : 1 beträgt.

Als Material für die Kernschicht werden bevorzugt thermoformbare Polyurethan-Schaumstoffe, Papier-, Metall-, oder Kunststoffwaben, eingesetzt. Als Fasermaterial können vorzugsweise Glasfasermatten, Glaserfaservliese, Glasfaserwirrlagen, Glasfasergewebe, geschnittene oder gemahlene Glas- oder Mineral-Fasern, Naturfasermatten und -gewirke, geschnittene Naturfasern und Fasermatten, -vliese und -gewirke auf Basis von Polymer-, Kohlenstoff- bzw. Aramidfasern sowie deren Mischungen eingesetzt.

Das eingesetzte Sandwich in Schritt a) wird üblicherweise so hergestellt, das zunächst auf die Kernschicht beidseitig eine Verstärkungsfaserdeckschicht aufgebracht wird. Danach wird mit einer Polyurethan-Zweikomponentenmischung (sog. Isocyanat- und Polyolkomponente) beaufschlagt. Gleichzeitig mit dieser Beaufschlagung können vorzugsweise zusätzlich partiell oder ganzflächig geschnittene Fasern aufgebracht werden.

Bei der Verwendung einer Verstärkungsfasermatte in Schritt a) wird diese vorgelegt und in üblicher Weise mit einer Mischung aus Polyurethan-Ausgangskomponenten getränkt. Auch hier können gleichzeitig partiell oder ganzflächig geschnittene Fasern zusätzlich aufgebracht werden.

Die erfindungsgemäßen PU-Formkörper können nach der Entnahme aus dem Werkzeug in einem Folgeschritt nach bekannten Verfahren mit Deckschichten oder Dekorstoffen kaschiert werden. Bei Verwendung geeigneter Deckschichten oder Dekorstoffe kann die Anbindung zum PU-Formkörper auch schon während des Herstellungsschrittes durch vorheriges Einlegen und gleichzeitiges Verpressen der Deckschicht oder des Dekorstoffes mit dem Sandwichpaket bzw. der Verstärkungsfasermatte in der Form erfolgen. Als Dekorwerkstoffe können hierbei gegen eine Durchtränkung mit Polyurethan gesperrte Textilstoffe, kompakte oder geschäumte Kunststofffolien sowie Sprüh- oder RIM-Häute aus Polyurethan verwendet werden. Als Deckschichten können auch für Außenanwendungen geeignete, vorgeformte Materialien wie Metallfolien oder - bleche sowie kompakte thermoplastische Kunststoff-Composites aus PMMA (Polymethylmethacrylat), ASA (Acrylester modifiziertes Styrol-Acrylnitril-Terpolymer), PC (Polycarbonat), PA (Polyamid), PBT (Polybutylenterephtalat) und/oder PPO (Polyphenylenoxid) in lackierter, lackierfähig eingestellter oder eingefärbter Form verwendet werden. Als Deckschichten können ebenfalls kontinuierlich oder diskontinuierlich hergestellte Deckschichten auf Basis von Melamin-Phenol-, Phenol-Formaldehyd-, Epoxy- oder ungesättigten Polyester-Harzen verwendet werden.

Die erfindungsgemäßen PU-Formkörper werden bevorzugt als Strukturbauteile oder Verkleidungsteile, insbesondere für die Autoindustrie, Möbelindustrie und Bauindustrie verwendet.

Die Erfindung soll anhand der nachfolgenden Beispiele näher erläutert werden.

### Beispiele

### Ausgangsmaterialien:

Polyol 1: Polyetherpolyol der OH-Zahl 865, hergestellt durch Addition von PO an Trimethylolpropan.
Polyol 2: Polyetherpolyol der OH-Zahl 1000, hergestellt durch Addition von PO an Trimethylolpropan als Starter.
Polyol 3: Polyetherpolyol der OH-Zahl 42, hergestellt durch Addition von 86 % PO und 14 % EO an Propylenglykol als Starter.
Polyisocyanat: Polymeres MDI mit einem Isocyanatgehalt von 31,5 Gew.-% (Desmodur 44 V 20L, Bayer Material Science AG).
Stabilisator: Siliconstabilisator Polyurax® SR 242, Osi Crompton Witco Specialities, D 60318 Frankfurt, Humboldstr. 12.
Katalysator: Aminkatalysator Thancat® AN10, Air Products GmbH, D-45527 Hattingen.
Farbstoff: Baydur® Schwarzpaste DN, Bayer Material Science AG.

### Polyurethanrezepturen:

| Rezeptur 1: | | |
|---|---|---|
| A-Komponente | | |
| Polyol 1 | 30,0 | Gew.-Teile |
| Polyol 2 | 20,0 | Gew.-Teile |
| Polyol 3 | 33,0 | Gew.-Teile |
| Katalysator | 2,8 | Gew.-Teile |
| Stabilisator | 1,3 | Gew.-Teile |
| Essigsäure | 0,3 | Gew.-Teile |
| Wasser | 1,4 | Gew.-Teile |
| Farbstoff | 3,3 | Gew.-Teile |

| B-Komponente | | |
|---|---|---|
| Polyisocyanat | 140,0 | Gew.-Teile |

Das Polyolgemisch (Polyole 1 bis 3) hat eine durchschnittliche OH-Zahl von 568 mg KOH/g.

| Rezeptur 2: | | |
|---|---|---|
| A-Komponente | | |
| Polyol 1 | 30,0 | Gew.-Teile |
| Polyol 2 | 20,0 | Gew.-Teile |
| Polyol 3 | 33,0 | Gew.-Teile |
| Katalysator | 2,8 | Gew.-Teile |
| Essigsäure | 0,3 | Gew.-Teile |
| Wasser | 1,4 | Gew.-Teile |
| Farbstoff | 3,3 | Gew.-Teile |

| B-Komponente | | |
|---|---|---|
| Polyisocyanat | 140,0 | Gew.-Teile |

Das Polyolgemisch (Polyole 1 bis 3) hat eine durchschnittliche OH-Zahl von 568 mg KOH/g.

### Beispiel 1 (erfindungsgemäß)

Die A-Komponente der Rezeptur 1 wurde mit gasförmigem CO₂ mittels Hohlwellenrührer, Typ Sternrührer beladen. Nach dem Beladen wurde eine Polyoldichte von 420 g/dm³ durch Auslitern ermittelt.

Auf eine Kemschicht, Papierwabe des Typs Wellpappe 5/5 mit einer Dicke von 10 mm wurden beidseitig Schnittglasfasermatten mit einem Flächengewicht von 450 g/m² aufgelegt und bei Raumtemperatur durch Aufsprühen mit insgesamt 450 g/m² der mit CO₂ beladenen Polyurethanrezeptur 1 beaufschlagt.

Dieser Sandwich wurde in ein Plattenwerkzeug eingebracht, in das zuvor zur Formgebung ein scharfkantiges Flachstahl mit den Maßen 6x30x300 mm eingelegt wurde. Anschließend wurde in dem auf 130°C aufgeheizten Werkzeug auf eine Wandstärke von 9,8 mm verpresst, wobei im Bereich des eingelegten Flachstahls entsprechend stärker auf 3,8 mm Wandstärke verpresst wurde.

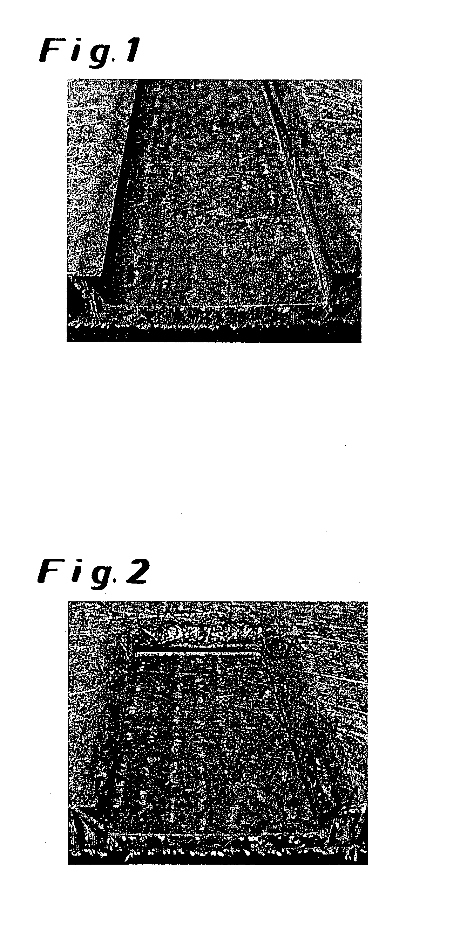

Der stärker verpresste Bereich weist die in Abbildung 1 aufgezeigte, starke Kantenausprägung auf.

### Beispiel 2 (Vergleich)

Der unter Beispiel 1 beschriebene Versuch wurde wiederholt, jedoch wurde die Rezeptur nicht mit CO₂ beladen.

Der stärker verpresste Bereich weist die in Abbildung 2 aufgezeigte, mangelhafte Kantenausprägung auf.

### Beispiel 3 (erfindungsgemäß)

Die Polyurethanrezeptur 1 wurde wie in Beispiel 1 mit gasförmigem CO₂ beladen.

Auf eine Kernschicht, Papierwabe des Typs Wellpappe 5/5 mit einer Dicke von 40 mm wurden beidseitig Schnittglasfasermatten mit einem Flächengewicht von 450 g/m² aufgelegt und bei Raumtemperatur durch Aufsprühen mit 550 g/m2 der mit CO₂ beladenen Polyurethanrezeptur 1 beaufschlagt. Zusätzlich wurden während des Aufsprühens im Bereich der späteren Verformung gehäckselte Glasfasern des Typs 816; 2400 tex / Fa. Mühlmeier mittels eines Cutters, Typ SW 2 /Fa. Wolfangel aufgebracht.

Dieser Sandwich wurde in ein Plattenwerkzeug eingebracht, das die Ausbildung eines 35 mm hohen, zylinderförmigen Domes mit 50 mm Durchmesser durch eine entsprechende Vertiefung im Werkzeugoberteil ermöglicht. Anschließend wurde in dem auf 130°C aufgeheizten Werkzeug auf eine Wandstärke von 17 mm verpresst, wobei der Bereich des Domes entsprechend weniger stark verpresst wurde.

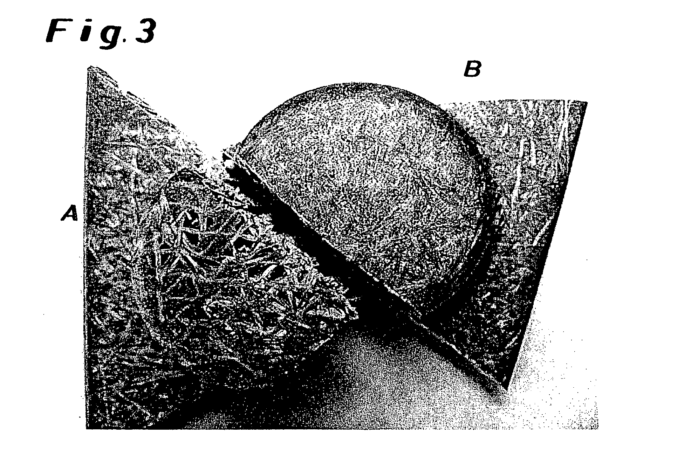

Der ausgebildete Dom hat die in Abbildung 3, Abschnitt B aufgezeigte, geschlossene Oberfläche.

### Beispiel 4 (Vergleich)

Der Versuch unter Beispiel 3 wurde wiederholt, allerdings wurde die Rezeptur 1 nicht mit CO₂ beladen, und es wurden keine zusätzlichen Glasfasern aufgebracht.

Der ausgebildete Dom hat die in Abbildung 3, Abschnitt A aufgezeigte, offene nicht erwünschte Oberfläche.

### Beispiel 5 (Vergleich)

Der Versuch unter Beispiel 3 wurde wiederholt, jedoch ohne CO₂-Beladung der Rezeptur 1.

Die zusätzlich aufgebrachten, gehäckselten Glasfasern fallen durch das schlechte Adhäsionsverhalten des Polyurethangemisches bis zum Einlegen des mit Polyurethan beaufschlagten Sandwichs herunter.

### Beispiel 6 (Vergleich)

Der Versuch unter Beispiel 1 wird wiederholt, allerdings wird anstelle der Rezeptur 1 die Rezeptur 2 eingesetzt.

Der stärker verpresste Bereich weist eine mangelhafte Kantenausprägung auf (ähnlich der in Abbildung 2 gezeigten).

## Patentansprüche

1. Verfahren zur Herstellung von Polyurethan-Formkörpern, wobei
a) ein Sandwich aus mindestens einer Kernschicht und zwei Verstärkungsfaserdeckschichten oder eine Verstärkungsfasermatte vorgelegt wird, wobei die Verstärkungsfaserdeckschichten bzw. die Verstärkungsfasermatte mit einer Polyurethanmischung beaufschlagt wird,
b) das Teil aus a) in eine Form eingelegt wird,
c) das Teil in der Form bei einer Werkzeugtemperatur zwischen 40 und 160°C geformt wird und gleichzeitig die Polyurethanmischung ausgehärtet wird,
d) der in c) hergestellte Formkörper aus der Form entnommen wird und
e) der Formkörper gegebenenfalls nachbearbeitet wird,
**dadurch gekennzeichnet, dass** bei der Beaufschlagung der Verstärkungsfaserdeckschichten bzw. der Verstärkungsfasermatte mit der Polyurethanmischung zumindest teilweise eine mit technischen Gasen beladene Polyurethanmischung verwendet wird, die zusätzlich einen Schaumstabilisator enthält.

2. Verfahren zur Herstellung von Polyurethan-Formkörpern gemäß Anspruch 1, **dadurch gekennzeichnet, dass** bei der Beaufschlagung der Verstärkungsfaserdeckschichten bzw. der Verstärkungsfasermatte mit der Polyurethanmischung zusätzlich geschnittene Fasern partiell oder ganzflächig aufgebracht werden.

3. Verwendung der nach dem Verfahren gemäß Anspruch 1 oder 2 hergestellten Formkörper als Struktur- oder Verkleidungsbauteile, insbesondere für die Auto-, Möbel- und Bauindustrie.
